Europäisches Patentamt

European Patent Office

Office européen des brevets

(11) Veröffentlichungsnummer: **0 319 701**
**A1**

## EUROPÄISCHE PATENTANMELDUNG

(21) Anmeldenummer: 88118150.7

(22) Anmeldetag: 31.10.88

(51) Int. Cl.⁴: **B01D 29/00**

(30) Priorität: 07.12.87 DE 3741388

(43) Veröffentlichungstag der Anmeldung:
14.06.89 Patentblatt 89/24

(84) Benannte Vertragsstaaten:
**AT BE CH DE ES FR GB GR IT LI LU NL SE**

(71) Anmelder: **HEILMEIER & WEINLEIN Fabrik für
Oel-Hydraulik GmbH & Co. KG
Neumarkter Strasse 26
D-8000 München 80(DE)**

(72) Erfinder: **Brunner, Rudolf
Wankstrasse 23
D-8011 Baldham(DE)**

(74) Vertreter: **Patentanwälte Grünecker,
Kinkeldey, Stockmair & Partner
Maximilianstrasse 58
D-8000 München 22(DE)**

(54) **Filtervorrichtung.**

(57) Die in Druckmittelsystemen verwendeten Filtervorrichtungen mit einer Feinfilterschicht (2) zwischen
durchlässigen Stützflächen haben einen beträchtlichen Durchflußwiderstand, weil die Durchlässe der
Stützflächen quer zur Strömungsrichtung zueinander
versetzt sind. Das Druckmittel wird zwischen den
Stützflächen gezwungen, in der Feinfilterschicht seitlich auszuweichen, bis es einen abströmseitigen
Durchlaß findet.

Um den Durchflußwiderstand der Filtervorrichtung erheblich herabzusetzen, ist der Abstand (SM)
zwischen den Stützflächen (4, 5) in der Mitte (6) der
Feinfilterschicht (2) größer als im Randbereich (7)
der Feinfilterschicht (2), so daß an wenigstens einer
Seite der Feinfiltschicht (2) ein Raum (19) entsteht.
Unter dem Strömungsdruck verformt sich die Feinfilterschicht (2) bis zur Anlage an der in Strömungsrichtung hinteren Stützfläche. Im Raum (19) verteilt
sich das Druckmittel und sucht den direkten Weg
durch die Feinfilterschicht in die abströmseitigen
Durchlässe.

Die Filtervorrichtung (F) eignet sich aufgrund des
reduzierten Durchflußwiderstandes besonders für hydraulische Arbeits- und Steuersysteme aller Art.

FIG.1

## Filtervorrichtung.

Die Erfindung betrifft eine Filtervorrichtung der aus der US-PS 42 63 140 bekannten Art.

Bei der aus der US-PS 42 63 140 bekannten Filtervorrichtung ist die Tiefe des Raums zwischen jeder Seite der Feinfilterschicht und der benachbarten Stützfläche nahe dem Randbereich am größten, weil die Stützflächen unmittelbar im Anschluß an den Randbereich scharfkantig nach außen gebogen sind, während die Seite der Feinfilterschicht vom Randbereich schräg wegstrebt. Die Feinfilterschicht kann unter dem Strömungsdruck zwar atmen und einen verhältnismäßig geringen Durchflußwiderstand garantieren sowie sich von Verschmutzungen selbsttätig befreien, jedoch besteht die Gefahr, daß die Feinfilterschicht trotz der Stützflächen unter dem Strömungsdruck zerstört wird. Im Übergang vom Randbereich, in den die Feinfilterschicht zwischen den Stützkörpern festgeklemmt ist, zum Raum zwischen der Seite der Feinfilterschicht und der benachbarten Stützfläche ist die freie Tiefe des Raums am größten. Unter dem Strömungsdruck legt sich die Seite der Feinfilterschicht gegen die Stützfläche an. Dabei treten in diesem exponierten Übergangsbereich starke Knickkräfte und Zugkräfte auf, die zum Einreißen der Feinfilterschicht führen können. Selbst wenn die Feinfilterschicht aus einem feinmaschigen Drahtgeflecht besteht, werden in diesem exponierten Übergangsbereich die Poren durch die Knickung und gleichzeitig starke Dehnung entweder unzweckmäßig vergrößert oder verkleinert, so daß dieser Bereich die gewünschte Filterwirkung nicht mehr erbringt und die insgesamt nutzbare Filterfläche verkleinert.

Bei einer aus der DE-PS 32 38 342 bekannten Filtervorrichtung der gleichen Art gestatten die bei den Stützflächen der Feinfilterschicht keinerlei Bewegungen in Strömungsrichtung, weil sie die Feinfilterschicht vollflächig zwischen sich festklemmen. Die Poren beider Stützflächen sind nicht aufeinander ausgerichtet, so daß sich das Druckmittel aus jeder Pore der einen Stützfläche durch die Feinfilterschicht und quer zur Strömungsrichtung einen Strömungsweg zu einer Pore der anderen Stützfläche suchen muß, was den Durchströmwiderstand unzweckmäßig erhöht. Ferner werden durch die feste Einspannung der Feinfilterschicht lokal stärker mit Schmutz beaufschlagte Flächen in der Feinfilterschicht geschaffen, die rasch zum Zuwachsen neigen. Eine Bewegung der Feinfilterschicht, auch unter wechselnden Strömungsrichtungen, mit der Verschmutzungen abgelöst werden könnten, ist nicht möglich.

Bei einer aus der GB-PS 20 86 752 bekannten Filtervorrichtung einer anderen Art ist ein horizontal anzuordnendes Filterplättchen unter dem Strömungsdruck soweit bogenförmig nach oben wölbbar, daß etwaige Gasanteile in der Flüssigkeitsströmung am höchsten Punkt des Bogens gesammelt werden und dort einen speziell ausgestalteten Bereich der Feinfilterschicht durchdringen können. Die Feinfilterschicht wird in flachem Zustand gefertigt und erst durch den Strömungszustand in die spätere gewölbte Form gebracht, wobei ein durchlässiger Stützkörper oder Stützrippen diese gewölbte Form vorgeben.

Der Erfindung liegt die Aufgabe zugrunde, eine Filtervorrichtung der eingangs genannten Art zu schaffen, bei der unter Beibehalt des Vorteils einer gleichmäßigen Verschmutzungsverteilung und eines geringen Durchströmwiderstandes die Gefahr einer Zerstörung der Feinfilterschicht durch die Strömung ausgeschlossen wird. Die gestellte Aufgabe ist bei einer Filtervorrichtung der im Patentanspruch 1 angegebenen Art gelöst.

Bei der erfindungsgemäßen Lösung gemäß Anspruch 1 kann sich die Feinfilterschicht in der Strömung aufgrund der Druckdifferenz bis an die Stützfläche verformen, das heißt sie kann atmen. Wegen des auf der Zuströmseite für ein ungehindertes Anströmen der Filteroberfläche entstehenden Raums ist der Durchflußwiderstand gering und verteilen sich Verschmutzungen gleichmäßig. Bei Strömungsstillstand kann sich die Feinfilterschicht rückverformen und zumindest einen Teil der Verschmutzung abstoßen. Die Gefahr einer Zerstörung der Feinfilterschicht bei ihrer Verformung ist beseitigt, weil die Verformung auf ein für die Feinfilterschicht unschädliches Maß begrenzt ist, und weil dank der allmählich wachsenden Tiefe des Raums die Verformung nahe dem Randbereich der Feinfilterschicht klein und erst gegen die Mitte der Feinfilterschicht hin größer ist, wo die Feinfilterschicht die Verformung problemlos verkraftet.

Zweckmäßige Ausführungsformen gehen aus den Unteransprüchen hervor.

Anhand der Zeichnung werden Ausführungsformen des Erfindungsgegenstandes erläutert. Es zeigen:

Fig.1 einen Schnitt durch eine erste Ausführungsform einer Filtervorrichtung,

Fig. 2 einen Schnitt durch eine zweite Ausführungsform, und

Fig. 3 a + b eine Draufsicht auf einen Ausschnitt der Filtervorrichtung von Fig. 1 mit einem zugehörigen Detailschnitt.

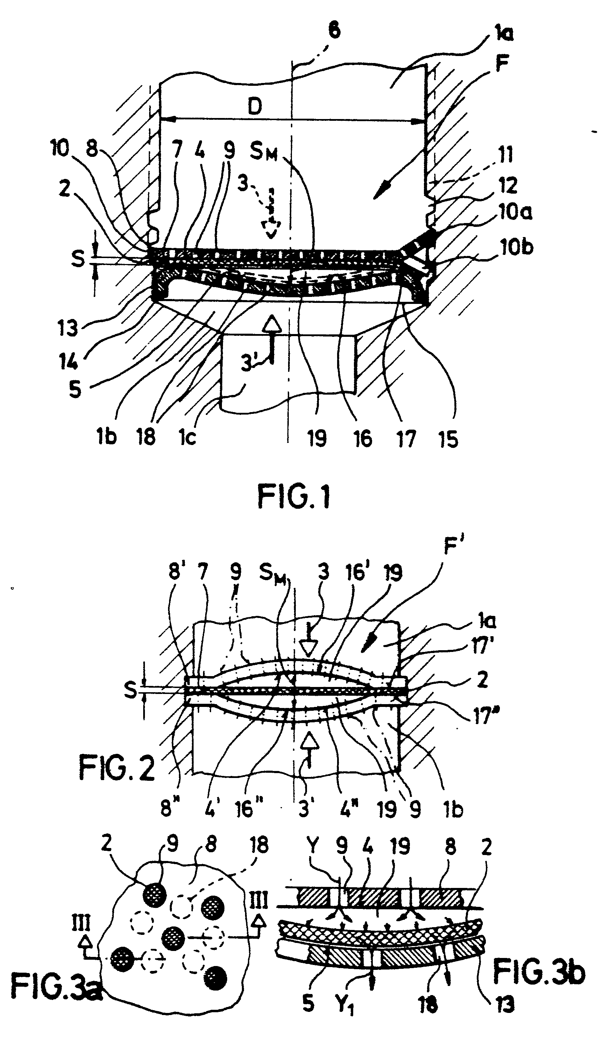

Eine Filtervorrichtung F gemäß Fig. 1 ist in einen druckmittelführenden Kanal, bestehend aus in aneinander anschließenden Abschnitten 1a, 1b und 1c, eingesetzt, um kleine Verunreinigungen im strömenden Druckmittel aufzufangen. Die Filtervorrichtung F enthält zu diesem Zweck eine Feinfilterschicht 2, die beispielsweise ein engmaschiges Drahtgeflecht, ein Filterpapier, ein Filtervlies oder dgl., sein kann. Das Druckmittel strömt im Kanal in der strichliert angedeuteten Strömungsrichtung 3. Es ist aber auch möglich, daß sich die Strömungsrichtung umkehrt und das Druckmittel in Richtung des Pfeiles 3' strömt. Damit die Feinfilterschicht 2, die flexibel und ggfs. empfindlich ist, unter den Strömungskräften nicht überbelastet wird, wird sie zwischen quer zur Strömungsrichtung liegenden Stützflächen 4 und 5 abgestützt.Sie ist nur im Randbereich 7 gehalten, z.B. eingeklemmt. Auch eine lose eingelegte Feinfilterschicht 2 erfüllt den Zweck, weil sie im Durchmesser im Kanals zentriert ist.

Die Stützfläche 4 wird von der Unterseite einer Grobfilterscheibe 8 mit über ihre Fläche verteilten Durchlässen 9 gebildet. Die andere Stützfläche 5 wird von einer Seite eines mit verteilten Durchlässen 18 versehenen Stützkörpers 13 gebildet, der mit einem Flansch 14 an einer Schulter 15 zwischen den Kanalabschnitten 1b und 1c abgestützt ist.

Die Filtervorrichtung F ist im vorliegenden Ausführungsbeispiel mittels der Grobfilterscheibe 8 im Kanal festgelegt, und zwar in einem Gewindegänge 12 aufweisenden Innengewinde 11. Zu diesem Zweck ist der Rand 10 der Grobfilterscheibe 8 so ausgebildet und dimensioniert, daß die Grobfilterscheibe 8 in die Gewindegänge 12 einschraubbar ist, bis die Stützfläche 4 den Randbereich 7 der Feinfilterschicht 2 wegen der Gewindesteigung zumindest in einem Umfangsabschnitt auf den Randbereich 17 der Stützfläche 5 drückt, so daß die Feinfilterschicht 2 festgeklemmt wird. Im Rand 10 der Grobfilterscheibe 8 sind durch einen Einschnitt zwei Y-förmig voneinander weggebogene Laschen 10a und 10b gebildet, die zum Ansetzen, Einschrauben und Eingreifen des Randes 10 in die Gewindegänge 12 dienen. Über die Klemmung der Feinfilteschicht 2 sichern sich die Stützflächen 4, 5 gegenseitig im Kanal und halten ihre Relativpositionen auch bei Druckschwankungen und Strömungsrichtungsumkehr ein.

Die Stützfläche 4 ist eben. Die Stützfläche 5 wird durch eine muldenartige Vertiefung 16 des Stützkörpers 13 gebildet. Die Dicke der Feinfilterschicht 2 ist mit S angedeutet. Sie bestimmt den Abstand zwischen den Stützflächen 4, 5. Durch die muldenartige Vertiefung 16 des Stützkörpers 14 wächst somit der Abstand zwischen den Stützflächen 4 und 5 mit Entfernung vom Randbereich 7 bis zur Mitte (Längsachse 6) bis auf einen maximalen Wert SM an, der größer ist als die Dicke S der Feinfilterschicht 2. Der Wert SM des Abstands ist jedoch kleiner als die der Feinfilterschicht 2 unter dem Strömungsdruck mögliche Verformung. Auf diese Weise wird an einer Seite der Feinfilterschicht 2 zwischen ihr und der Stützfläche 5 ein Raum 19 geschaffen.

Bei der Ausführungsform der Fig. 2 ist die Filtervorrichtung F' aus zwei Grobfilterscheiben 8' und 8'' und der mit ihrem Randbereich 7 dazwischen festgeklemmten Feinfilterschicht 2 gebildet und zwischen die Kanalabschnitte 1a und 1b eingesetzt. Die beiden Grobfilterscheiben 8' und 8'' sind gleich ausgebildet. Jede ist mit einer muldenartigen Vertiefung 16' und 16'' ausgebildet, die die Stützflächen 4' und 4'' definieren. Beide Grobfilterscheiben 8' und 8'' sind mit wahllos verteilten Durchlässen 9 ausgestattet. Sie klemmen die Feinfilterschicht 2 mit randseitigen Klemmstreifen 17', 17'' membranartig ein. In der Mitte hat der Abstand S zwischen den Stützflächen 4', 4'' den maximalen Wert SM. Da die Vertiefungen 16', 16'' voneinander weggewölbt sind, liegt - bei Fehlen einer Druckmittelströmung - an beiden Seiten der Feinfilterschicht 2 jeweils ein Raum 19 vor. Beide Strömungsrichtungen 3, 3' sind möglich.

In beiden Ausführungsformen gemäß den Fig. 1 und 2 sind die Durchlässe 9 und 18 wahllos angebrachte Perforierungen oder Öffnungen mit einer die Porengröße der Feinfilterschicht 2 deutlich übersteigenden Öffnungsweite. In Strömungsrichtung sind die Durchlässe 9 und 18 bzw. 9 nicht notwendigerweise aufeinander ausgerichtet.

Aus den Fig. 3a und 3b ist ersichtlich, wie sich die Filtervorrichtung F gemäß Fig. 1 bei Auftreten einer Strömung in Strömungsrichtung 3 verhält.

Fig. 3a läßt erkennen, daß die Durchlässe 9 der Grobfilterscheibe 8 quer zur Strömungsrichtung über den Durchlässen 18 im darunterliegenden Stützkörper versetzt sind. Die Feinfilterschicht 2 ist in den Durchlässen 9 sichtbar.

Gemäß Fig. 3b wird bei Auftreten einer Strömung das Druckmittel durch die Durchlässe 9 zwischen die Grobfilterscheibe 8 und den Stützkörper 13 gedrückt. Der Durchflußwiderstand der Feinfilterschicht 2 veranlaßt diese, sich im Rahmen ihrer Flexibilität soweit zu verformen, bis sie sich von der Stützfläche 4 abhebt und auf die Stützfläche 5 auflegt. Das in Richtung der Pfeile Y in den dann frei werdenden Raum 19 einströmende Druckmittel kann sich frei verteilen und an beliebigen Stellen in die Feinfilterschicht 2 eindringen. Nachdem das Druckmittel die Feinfilterschicht 2 durchsetzt hat und dabei gefiltert wurde, sucht es sich den widerstandsärmsten Weg in Richtung der Pfeile Y1 durch die Durchlässe 18 des Stützkörpers 13.

Hört die Strömung in Strömungsrichtung 3 auf, verformt sich die Feinfilterschicht wieder in die Stellung gemäß Fig. 1 zurück. Wird die Strömungsrichtung umgekehrt (Pfeil 3'), dann kann sich das Druckmittel in dem an der Unterseite der Feinfilterschicht 2 stehenden Raum frei verteilen und nach Durchtritt durch die Feinfilterschicht 2 ungehindert durch die Durchlässe 9 ausströmen. Die Feinfilterschicht 2 atmet unter den aus dem Strömungsdruck resultierenden Kräften, wodurch festgesetzte Verunreinigungen zumindest zum Teil wieder abgelöst werden. Außerdem hat die Verformung der Feinfilterschicht 2 zur in Strömungsrichtung hintenliegenden Stützfläche den Vorteil, daß sich die in den geschaffenen Raum 19 eindringenden Verunreinigungen auf der gesamten Oberfläche und über den gesamten Querschnitt der Feinfilterschicht 2 verteilen, wodurch unerwünschte lokale Verschmutzungskonzentrationen unterbleiben.

Bei der Ausführungsform gemäß Fig. 1 sind die Grobfilterscheibe 8 der Stützkörper 13 verschiedenartige und im wesentlichen nur im Hinblick auf ihre Durchlässe 9 und 18 ähnliche Teile. Bei der Ausführungsform gemäß Fig. 2 sind hingegen die beiden Grobfilterscheiben 8' und 8" gleich oder identisch. was die Herstellung, die Herstellungskosten und die Montage der Filtervorrichtung F' vereinfacht bzw. verbilligt. Die Grobfilterscheiben und der Stützkörper könnten auch aus Drahtgeflecht bestehen. Wichtig ist nur, daß der Feinfilterschicht die Möglichkeit und der Raum zum Atmen unter dem Strömungsdruck angeboten wird. Ferner ist es möglich, mehrere Feinfilterschichten gleicher oder unterschiedlicher Filterwirkung hintereinander zu schalten.

**Ansprüche**

1. Filtervorrichtung in einem Strömungskanal

- mit einer flexiblen Feinfilterschicht (2)

- diese ist im Randbereich (7) zwischen durchlässigen Stützflächen (4, 5, 4', 4") eingeklemmt,

- zwischen wenigstens einer Seite der Feinfilterschicht und der benachbarten Stützfläche liegt ein Raum (19) vor,

- die Tiefe des Raums (19) nimmt mit zunehmenden Abstand vom Randbereich (7) allmählich bis auf einen maximalen Wert (SM) zu;
- der maximale Wert (SM) ist kleiner als die maximal mögliche, strömungsbedingte Verformung der Feinfilterschicht in Richtung zu der benachbarten Stützfläche.

2. Filtervorrichtung nach Anspruch 1,

- in der der maximale Wert (SM) der Tiefe des Raums (19) größer ist als die Dicke der Feinfilterschicht (2).

3. Filtervorrichtung nach Anspruch 1,

- in der die eine Stützfläche (4) eben,
- und die andere Stützfläche (5) mit einer muldenförmigen Vertiefung (16) ausgestattet ist, und
- in der die muldenförmige Vertiefung (16) von der Feinfilterschicht (2) weggerichtet ist.

4. Filtervorrichtung nach Anspruch 1,

- bei der beide Stützflächen (4', 4") mit muldenförmigen Vertiefungen (16', 16") ausgestattet sind.

5. Filtervorrichtung nach den Ansprüchen 1 bis 4,

- bei der der maximale Wert (SM) der Tiefe des Raums (19) um ca. 1/10 des Durchmessers (D) der Stützfläche (4, 5, 4', 4") größer als der Abstand (S) der Stützflächen im Randbereich der Feinfilterschicht (2) ist.

6. Filtervorrichtung nach den Ansprüchen 1 bis 5,

- bei der die Stützflächen an perforierten Grobfilterscheiben (8, 8', 8") vorgesehen sind.

7. Filtervorrichtung nach den Ansprüchen 1 bis 5,

- bei der eine Stützfläche (4) an einer perforierten Grobfilterscheibe (8) vorgesehen, und
- die andere Stützfläche (5) an einem perforierten Stützkörper (13) vorgesehen ist.

8. Filtervorrichtung nach den Ansprüchen 1 bis 7,

- bei der die Feinfilterschicht (2) ein in Form und Größe der Stützfläche entsprechendes Filterplättchen mit durchgehend gleicher Dicke ist.

FIG.1

FIG.2

FIG.3a

FIG.3b

Europäisches Patentamt

**EUROPÄISCHER RECHERCHENBERICHT**

Nummer der Anmeldung

EP 88 11 8150

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,X | GB-A-2 086 752 (GELMAN SCIENCES INC.) * Seite 2, Zeilen 15-54,78-83; Seite 3, Zeilen 8-20 * | 1,2,6,8 | B 01 D 29/00 |
| D,A | US-A-4 263 140 (R.J. WUJNOVICH et al.) * Spalte 3, Zeilen 58-65; Spalte 5, Zeilen 14-68; Spalte 6, Zeilen 1-46 * | 1,2,4 | |
| X | US-A-2 584 206 (F.G. HODSON) * Spalte 2, Zeilen 52-57; Spalte 3, Zeilen 1-5 * | 1,4,8 | |
| X | US-A-3 019 184 (J.G. BROWN) * Spalte 1, Zeilen 66-72; Spalte 2, Zeilen 1-39 * | 1,4,8 | |
| X | US-A-2 547 797 (J.E. TORREY et al.) * Spalte 4, Zeilen 1-68 * | 1,2,4,6 -8 | |
| X | DE-B-1 043 705 (UTINA-ELEKTROWERK) * Spalte 3, Zeilen 23-70; Spalte 4, Zeilen 1-17 * | 1,2,4 | RECHERCHIERTE SACHGEBIETE (Int. Cl.4) B 01 D |

Der vorliegende Recherchenbericht wurde für alle Patentansprüche erstellt

| Recherchenort | Abschlußdatum der Recherche | Prüfer |
|---|---|---|
| DEN HAAG | 15-02-1989 | KERRES P.M.G. |